Europäisches Patentamt

**European Patent Office**

Office européen des brevets

(11) Publication number : **0 361 277 B1**

(12) **EUROPEAN PATENT SPECIFICATION**

(45) Date of publication of patent specification :
02.12.92 Bulletin 92/49

(51) Int. Cl.⁵ : **B01D 53/00,** C05F 9/00,
B01J 8/12

(21) Application number : **89117284.3**

(22) Date of filing : **19.09.89**

(54) **Compost filter for continuous renewal of the filter bed for purification and deodorization of gaseous emissions during composting of solid urban and similar waste.**

(30) Priority : **28.09.88 IT 6520888**

(43) Date of publication of application :
**04.04.90 Bulletin 90/14**

(45) Publication of the grant of the patent :
**02.12.92 Bulletin 92/49**

(84) Designated Contracting States :
**AT BE CH DE ES FR GB GR LI LU NL SE**

(56) References cited :
**EP-A- 0 132 503**
**EP-A- 0 154 684**
**WO-A-87/00768**
**WO-A-88/03434**
**DE-A- 2 605 606**

(56) References cited :
**DE-A- 3 030 562**
**US-A- 2 962 122**
**PATENT ABSTRACTS OF JAPAN, vol. 5, no.**
**114 (C-64)[786], 23rd July 1981; & JP-A-56 53**
**726 (TAKUMA K.K.) 13-05-1981**

(73) Proprietor : **OFFICINE MECCANICHE**
**FERRERO S.p.A.**
**Via Privata Trento n. 4**
**I-17047 Vado Ligure (Sv) (IT)**

(72) Inventor : **Ferrero, Giacomo**
**Via Privata Trento n. 4**
**I-17047 Vado Ligure (SV) (IT)**

(74) Representative : **Ferrarotti, Giovanni**
**Studio Consulenza Tecnica Dr. Ing. Giovanni**
**Ferrarotti Via Alla Porta Degli Archi 1/7**
**I-16121 Genova (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

It is well known that gas emissions occur during aerobic composting of the organic fractions of Solid Urban Waste, sometimes mixed with sewage sludge, residues of domestic waste water purifying processes. These gaseous emissions are due to the oxidation of compostible fractions during complex chemical and physical reactions which cause a considerable rise in temperature of the whole mass, as well as to its sanitizing and demolition of macromolecules of organic matter, sugars, fats, proteins and cellulose. The residue of these processes is a soft, porous product without any pathogenic germs, universally known under the name "compost" and widely used as fertilizer and amendment in agriculture.

Gases and vapours released during the process, especially during its first few days, are rich in stinking products. These bad smelling emissions are produced by a mass of organic matter fermenting at a relatively high temperature range between 50° and 72°C and they are saturated with vapour in equilibrium at that temperature.

The gas, usually trapped at the base of the stokpile, is cooled down and condenses into a mist.

If these gases are let into a compost filter, they will yield their condensate droplets to the compost, so that the latter will soon be wetted through and will lose its filtering capicity.

It is obvious that these gaseous emissions produced by such waste biotransformation systems, have to be filtered and purified, to eliminate the bad smell from these gases and vapours before they can be released into the atmosphere.

It is clear that any known filter type might be used for filtration, but the process would be very expensive since the filter surface or beds would have to be continuously renewed as they would be wetted through by the saturated vapours.

On the other hand, it has been observed that the compost, which is soft and porous, can successfully act as a filter bed and offers the advantage of being locally available. However, it has also been found that the compost, when used as a filter bed, loses its filtering capacity. This means that the filter has to be continuously provided with fresh compost while the depleted and drenched compost has to be continuously removed.

This invention has the aim to provide a compost filter, apt to meet the requirements for successfully and continuously to filter off gas emissions from biotransformation processes and progressively to replace the depleted compost by fresh compost in order to ensure efficient filtration.

This invention has the aim radically to solve the problem through the implementation of a compost filter with a continuously renewed filter bed by progressive elimination from below, of the drenched compost which has completely lost its absorption capacity, fresh compost being continuously added at the filter top and in which the gas to be purified flows diagonally in countercurrent, from the bottom upwards, through the increasingly fresher and better filtering compost layer, until the purified gas is discharged at the top of the filter by an exhaust fan and released into the atmosphere.

It is known from EP-A-0132503 a process for the cleaning of highly polluted gas produced by industries and urban incinerators. This process foresees the flow of the gas across a highly active bio-mass containing Actynomiceties and Penicillin. Reagents are added to the gas to clean, so that the purified gas contains less than 150 mg/m$^3$ of organic substances.

The installation according to the named EP-A-0132503 foresees a cylindrical chamber containing the bio-mass, which is crossed by gas in vertical sense without making sure the uniformity of passage. In fact this installation presents only an inlet, whilst the outlet is settled laterally upwards. The bio-mass is partially recycled and distributed by means of a rotable distributor.

The WO-A-8803434 foresees a reactor for the cleaning of gas, which passes diagonally by means of shutters through a downward moving layer of granular absorption. There are also known other solutions for the cleaning and chemical correction of gases. For instance in EP-A-0154684 it is foreseen a cell filter containing the filtering substance and in DE-A-2605606 it is foreseen a filter with filtering masses traversed vertically by the gas to clean. The DE-A-3030562 states a particular solution with a multiplicity of superposed chambers provided with lateral openings; these chambers contain the filtering material and they are traversed horizontally by the gas.

Document JP-A-5653726 represents the most relevant state of the art. It shows a compost filter suitable for purifying and deodorizing gaseous emissions developed during composting of solid urban waste and/or biological sludges comprising the features of the preamble of claim 1. Starting from this disclosure problems occur with the uniformity of the flow of waste gases and the uniformity of the continuously lowering of the compost mass. These problems are solved by the features of the characterizing part of claim 1.

It is also known US-A-2962122 which treats a dust separator and WO-A-8700768 which treats a moving bed reactor for the treatment of bulk material.

For practical and exemplified implementation purposes, the invention in quest:ion is illustrated in the following drawings, in which:

Fig. 1 shows a vertical cross section of the filter, according to A-A in Fig. 2;

Fig. 2 shows a detail of the wall section according to X-X in Fig. 1, provided with anti-scaffold protection;

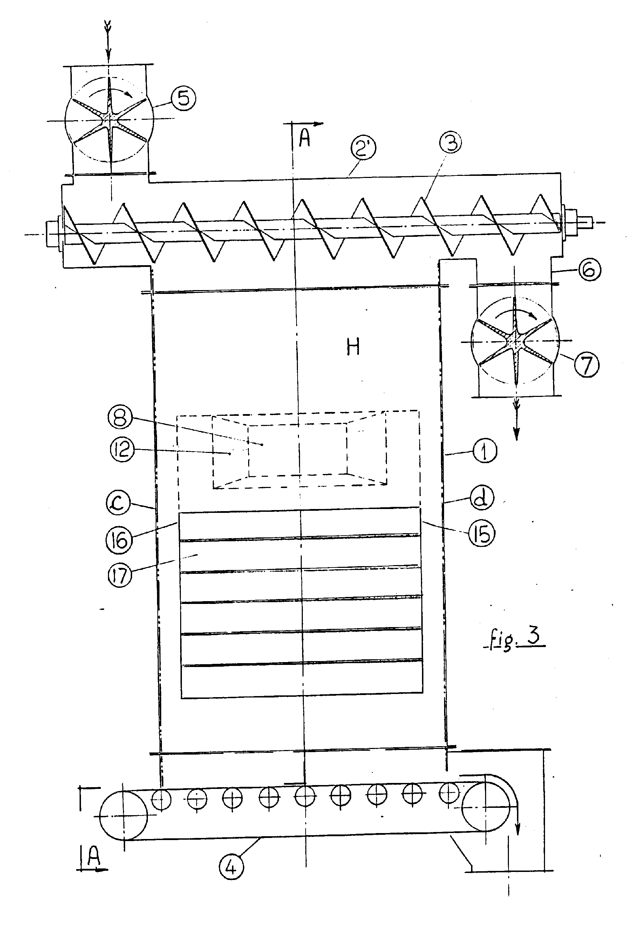

Fig. 3 shows a vertical lengthwise section of the filter according to B-B in Fig. 1.

With reference to these Figures, the filter is consisting of a metal casing 1 with opposite walls a,b -c,d, a cover 2,2' and an apron conveyer belt 4 delimiting the hollow space H of the filter.

This hollow space H is filled with fresh compost charged at the top of the filter by a levelling screw feeder 3, which in turn receives the fresh compost from a bin with rotary valve 5 to prevent unwanted air from entering the hollow space H or gas from leaving the filter when pressurized.

It is clear that the feed capacity of the screw feeder 3 shall be greater than the capacity of the rotary valve 5 and the latter shall have a greater capacity than the maximum capacity of the conveyers to be installed ahead of this valve.

The screw feeder 3 has the important function to distribute the compost evenly in the whole space H. The delivery rate of the fresh compost shall of course be greater than the quantity of compost removed by the apron conveyer at the bottom of the filter. A certain portion of the compost entering the filter by means of the rotary valve 5 and levelling screw feeder 3 will be in excess and has to be conveyed by the srew feeder 3 to the outlet duct 6 to be discharged by the rotary valve 7 for further processing (e.g. refining, mixing with other fertilizers, pelletizing, storage and maturing etc ) The charged compost, which has lost most of its absorption and filtering capacity, is discharged at the bottom of the hollow space H of the filter by means of a appropriate continuous discharging device the capacity of which shall be stepless adjustable.

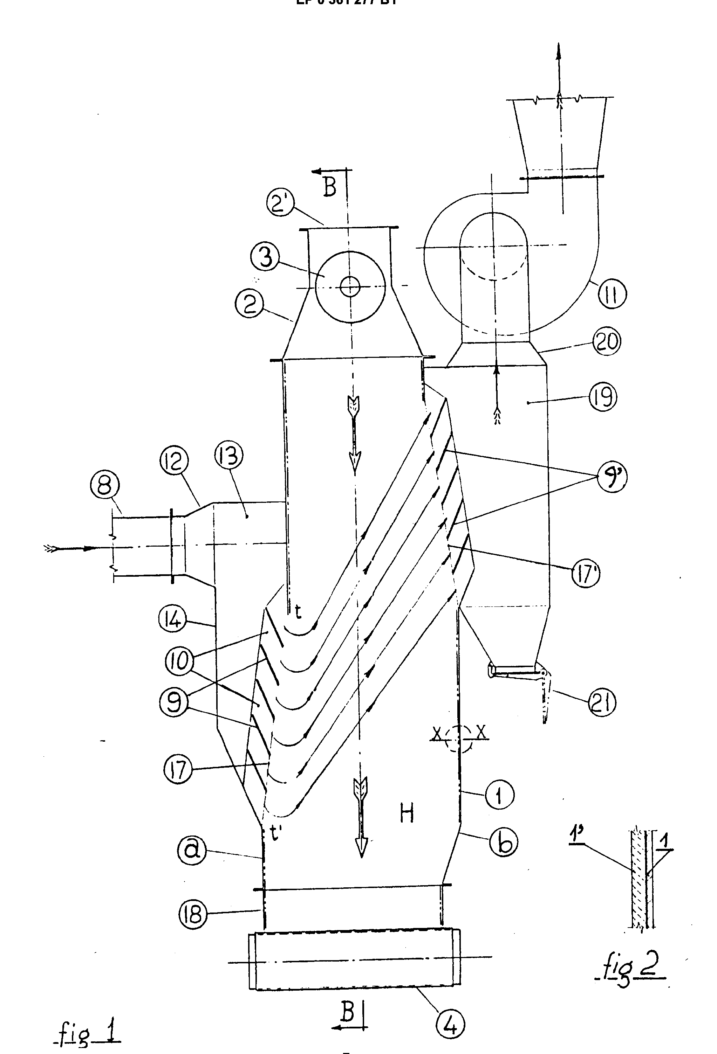

In fig.1, this discharging system is consisting of an apron conveyer with linenized rubber belt 4.

The gas and vapours suitably collected in various points of the waste biotransformation plant, are conveyed through a properly dimensioned duct 8 and nosepiece 12, into the front distribution chamber 13 of the filter. The section AA in fig. 1 clearly shows that this chamber 13, outwards delimited by the front wall 14 and by the sidewalls 15 and 16 (fig.2), is delimited at the rear by the filter wall a on which it is resting. This wall a, delimiting one side of the filter cavity H, as explained above, has an opening 17 connecting the hollow space H to the distribution chamber 13. This opening 17 is delimited at its upper and lower end respectively by the edpes t and t' of the port in the filter wall a and laterally by the edges of the sidewalls 15 and 16 laterally delimiting the front distribution chamber 13. It can be observed in fig. 1 that the sidewall a is not flat since its vertical section extending from the coupling flange of the cover 2 to the upper edge t of the opening 17 is followed by an outwards slanting section, t, t' featuring the opening 17. This is followed by a third section of the vertical wall a located between the edge t' and the flange coupling the conveyor bin 18 to the apron conveyer 4.

The opening 17 is closed by a "shutter" type device consisting of blades 9 having parallel horizontal longitudinal axes and strongly downwards slanting, but also parallel, transverses axes, as illustrated in fig.1. The edge of the blades facing the hollow space H of the filter is located on the plane identified by the upper edge t and lower edge t' of the opening in the wall a.

The blades 9 are further stiffened by plates 10 thus conferring a considerable strength to the "shutter" structure, This "shutter" has the function to permit the guided flow of the gas and vapour to be filtered from the front distribution chamber 13 to the hollow space H in the filter, while preventing at the same time the compost in H from suddenly entering the chamber 13.

Theoretically, it may also be assumed that the filter can function without the above described "shutter", simply by preparing an opening (17) so that the compost can freely be gravity discharged from H into the chamber 13.

Upon closer examination, it becomes however clear that in such case, the compost dumped into the chamber 13 would soon be vapour impregnated and soaked so that its descend and discharge on the apron feeder 4 would be difficult to achieve.

A study on the motion of bulk material in storage bins shows that the material moves vertically downward involving in its motion solely the particles vertically located above the discharge opening (or in our case the apron conveyer 4), while adjacent materials are involved in the downward movement only at the top level of the material in the storage bin . These considerations make it advisable to opt for the "shutter" in question, since the compost cannot force its way into the chamber 13 but has to be progressively pushed downward as the soaked compost is discharged on the apron feeder belt and has thus to be continuously renewed due to the fact that the vertical plane on which the lower edge (t') of the shutter is resting, is located on the same plane as the apron feeder 4.

The gases entering the hollow filter space H are drawn upwards and leave the filter through a second "shutter" consisting of blades 9' fitted in a recess 17' implemented, according to the same criteria, in the upper portion of the filter wall b opposite the gas inlet wall a. This second shutter 17' connects the hollow space H to the suction chamber 19 which, in turn, is connected to a suction fan 11 by means of the nozzle 20. Dust and plastic shreds may collect in the suction chamber 19, to be discharged at intervals through the trap 21. The wall opposite each "shutter" shall be perfectly vertical to ensure efficient operation of the filter and to prevent the formation of "hangings" which would hinder the descend of the compost. No doubt, the "shutter" is braking the compost in its downward movement. The wall opposite the "shutter" shall therefore be perfectly smooth to prevent the formation of "scaffolds" so that the compost, which is retained on one side, will slide down along the opposite side without forming any hangings.

To minimize sticking of the compost to the filter walls, the latter are covered with teflon sheets glued onto the vertical or subvertical metal walls 1, as shown in fig.2.

## Claims

1. Compost filter for purifying and deodorizing gaseous emissions developed during composting of solid urban waste and/or biological sludges, comprising:
   - a metal casing (1) formed by pairs of opposite walls (a,b - c,d) thus forming a chamber (H);
   - an upper sealed feeder and levelling device (3) for the fresh compost in the chamber (H);
   - a sealed mechanism (4) to discharge the depleted compost at the bottom of the metal casing (1);
   - a device (8 through 16) supplying the gas to be purified;
   - a suction fan (11, 19) for elimination of the purified gases through the filter outlet (17');
   - a recess (17) in the lower part of the wall (a) of the filter acting as a gas inlet;
   - a shutter formed by parallel, horizontal downward slanting blades (9), to ensure distribution of the gas and to keep back the compost, located in the recess (17);
   characterized by
   - a recess (17') in the upper part of the opposite wall (b) acting as an outlet for the purified gases;
   - a shutter formed by parallel, horizontal, downward slanting blades (9') for enabling of the gas to leave the filter space (H) and to keep back the compost, located in the outlet recess (17');
   - the filter walls (a, b) featuring the recesses (17, 17') are outward slanting, whereas the walls (b, a) opposite these openings (17, 17') are vertical.

2. Filter as described in claim 1, characterized by the fact that compost feeding is ensured by a screw feeder (3), a metering device (5) feeding the worm screw and an adjustable device (7) to discharge the excess compost.

3. Filter as described in claim 2, characterized by the fact that the capacity of the screw feeder (3) is greater than the discharge capacity of the apron conveyer (4) at the bottom of the filter so that the filter is always filled with leveled compost.

4. Filter as described in claim 1, characterized by the fact that the device feeding the gas to be purified is consisting of a distribution chamber (13) located outside the inlet opening (17).

5. Filter as described in claim 1, characterized by the fact that the device for exhausting the purified gas is consisting of a chamber (19), located outside the outlet opening (17') connected to the suction fan (11) for release of the purified gas into the atmosphere and provided with a trap (21) for discharging any gas entrained particles.

6. Filter as described in claim 1, characterized by the fact that the filter walls (1) are internally lined with anti-friction material (1') e.g. Teflon to prevent the compost from sticking on the metal walls.

7. Filter as described in claim 1, characterized by the fact that the lower edge (t') of the gas inlet opening (17) is located on the plane of the apron conveyer belt (4).

## Patentansprüche

1. Kompostfilter zur Reinigung und Deodorierung von gasförmigen Emissionen während der Kompostierung von festem Stadtmüll und/oder biologischem Schlamm, enthaltend: - ein metallisches Gehäuse (1), das durch Paare von gegenüberliegenden Wänden (a,b-c,d) gebildet wird und eine Kammer (H) formt;
   - eine oben geschlossene Zuführ- und Ausgleichsvorrichtung (3) für den frischen Kompost in die Kammer H;
   - einen geschlossenen Mechanismus (4) für das Austragen der erschöpften Kompostes am Boden des metallischen Gehäuses (1);
   - eine Vorrichtung (8-16) zur Zuführung des zu reinigenden Gases;
   - einen Saugzugventilator (11,19) für die Entfernung des gereinigten Gases durch den Filterauslaß (17');
   - eine als Gaseinlaß wirkende Ausnehmung (17) im unteren Teil der Wand (a) des Filters;
   - eine durch parallele, horizontale und nach unten geneigte Blätter (9) gebildete Jalousie, die in der Ausnehmung (17) angeordnet ist und die die Verteilung des Gases sichert und den Kompost zurückhält; gekennzeichnet durch - eine Ausnehmung (17') im oberen Teil der gegenüberliegenden Wand (b), die als Auslaß für das gereinigte Gas wirkt;
   - eine durch parallele, horizontale und nach unten geneigte Blätter (9') gebildete Jalousie, die in der Auslaßausnehmung (17') angeordnet ist und dem Gas das Erreichen des Filterraumes (H) ermöglicht und den Kompost zurückhält;
- die Filterwände (a,b) mit den Ausnehmungen (17, 17') sind nach außen geneigt, wogegen die diesen Öffnungen (17, 17') gegenüberliegenden Wände (b,a) vertikal verlaufen.

2. Filter nach Anspruch 1, **dadurch gekennzeichnet,** daß zur Zuführung des Kompostes ein Schneckenförderer (3), eine den Schneckenförderer speisende Dosiervorrichtung (5) und eine einstellbare Vorrichtung (7) zum Abführen des überschüssigen Kompostes vorgesehen ist.

3. Filter nach Anspruch 2, **dadurch gekennzeichnet,** daß die Kapazität der Förderschnecke (3) größer ist als die Abfuhrkapazität des Förderers (4) am Filterboden, sodaß das Filter jederzeit gleichmäßig mit Kompost gefüllt ist.

4. Filter nach Anspruch 1, **dadurch gekennzeichnet,** daß die das zu reinigende Gas zuführende Vorrichtung aus einer außerhalb der Einlaßöffnung (17) angeordneten Verteilungskammer (13) besteht.

5. Filter nach Anspruch 1, **dadurch gekennzeichnet,** daß die Vorrichtung zum Abziehen des gereinigten Gases aus einer Kammer (19) besteht, die außerhalb der Auslaßöffnung (17') angeordnet ist und mit dem Saugzugventilator (11) verbunden ist, um das gereinigte Gas in die Atmosphäre zu entlassen, wobei eine Klappe (21) zur Abgabe von Partikeln vorgesehen ist, die vom Gas mitgerissen wurden.

6. Filter nach Anspruch 1, **dadurch gekennzeichnet,** daß die Filterwände (1) innen mit einem Antifriktionsmaterial (1)', z.B. Teflon, versehen sind, um ein Ankleben von Kompost an den metallischen Wänden zu verhindern.

7. Filter nach Anspruch 1, **dadurch gekennzeichnet,** daß die untere Kante (t') der Gaseinlaßöffnung (17) in der Ebene des Bandförderers (4) angeordnet ist.

**Revendications**

1. Filtre à compost pour purifier et désodoriser les émissions gazeuses formées pendant le compostage des résidus solides urbains et/ou des boues biologiques, comprenant :
   - un caisson métallique (1) constitué par des paires de parois opposées (a,b-c,d) en formant ainsi une chambre (H) ;

   - un système d'alimentation supérieur étanche et un dispositif de nivellement (3) pour le compost frais introduit dans la chambre (H) ;
   - un mécanisme étanche (4) pour évacuer le compost usé en bas du caisson métallique (1) ;
   - un dispositif (8 à 16) introduisant le gaz à purifier ;
   - un ventilateur d'aspiration (11, 19) pour l'élimination des gaz purifiés par la sortie (17') du filtre ;
   - un évidement (17) dans la partie inférieure de la paroi (a) du filtre jouant le rôle d'entrée de gaz ;
   - un obturateur constitué par des lames (9) parallèles, horizontales, inclinées vers le bas, pour assurer la distribution du gaz et pour retenir le compost, situé dans l'évidement (17) ;
   caractérisé par :
   - un évidement (17') dans la partie supérieure de la paroi opposée (b) jouant le rôle de sortie pour le gaz purifié ;
   - un obturateur constitué par des lames (9') parallèles, horizontales inclinées vers le bas, permettant aux gaz de quitter l'espace de filtrage (H) et permettant de retenir le compost, situé dans l'évidement de sortie (17') ;
   - les parois (a, b) du filtre se caractérisant par des évidements (17, 17') inclinées vers l'extérieur, tandis que les parois (b, a) opposées à ces ouvertures (17, 17') sont verticales.

2. Filtre selon la revendication 1, caractérisé par le fait que le système d'alimentation en compost comprend un système d'alimentation à vis (3), un dispositif doseur (5) alimentant la vis sans fin et un dispositif réglable (7) pour dégager l'excès de compost.

3. Filtre selon la revendication 2, caractérisé par le fait que la capacité du système d'alimentation à vis (3) est supérieure à la capacité de décharge du convoyeur inférieur (4) installé en bas du filtre afin que le filtre soit toujours rempli de compost à niveau.

4. Filtre selon la revendication 1, caractérisé par le fait que le dispositif introduisant le gaz à purifier est constitué d'une chambre de distribution (13) située à l'extérieur de l'ouverture d'entrée (17).

5. Filtre selon la revendication 1, caractérisé par le fait que le dispositif pour dégager le gaz purifié comprend une chambre (19) située à l'extérieur de l'ouverture de sortie (17') reliée au ventilateur d'aspiration (11) pour dégager le gaz purifié dans l'atmosphère et équipée d'une trappe (21) pour dégager les éventuelles particules entraînées par le gaz.

6. Filtre selon la revendication 1, caractérisé par le fait que les parois (1) du filtre sont revêtues intérieurement d'un matériau anti-friction (1') tel que du téflon pour empêcher le compost de coller sur les parois métalliques.

7. Filtre selon la revendication 1, caractérisé par le fait que le bord inférieur (t') de l'ouverture d'entrée du gaz (17) est situé dans le plan de la bande convoyeuse inférieure (4).

fig 1

fig 2

fig. 3